# EUROPÄISCHE PATENTSCHRIFT

(11) **EP 2 634 471 B1**
(45) Veröffentlichungstag und Bekanntmachung des Hinweises auf die Patenterteilung: **18.09.2019**
(21) Anmeldenummer: 13155251.5
(22) Anmeldetag: 14.02.2013
(51) Int. Cl.: F16T 1/34, F04F 10/02, F16T 1/12, F24H 8/00

(54) **Kondensatabscheider**
Condensate separator
Séparateur de condensat

(30) Priorität: 01.03.2012 DE 102012003950
(43) Veröffentlichungstag der Anmeldung: 04.09.2013
(73) Patentinhaber: Vaillant GmbH, 42859 Remscheid (DE)
(72) Erfinder: Reinert, Andreas, 58455 Witten (DE); Funcke, Jens, 45525 Hattingen (DE); Badenhop, Thomas, 51688 Wipperfürth (DE); Autermann, Andre, 40239 Düsseldorf (DE); Plümke, Marco, 40589 Düsseldorf (DE)
(74) Vertreter: Popp, Carsten

(56) Entgegenhaltungen:
- JP-A- 2008 115 546
- US-A- 4 611 622
- US-A- 4 729 328
- US-A- 5 379 749
- US-A- 5 704 343

## Beschreibung

Die Erfindung betrifft einen Kondensatabscheider für ein in Teilen unter Unterdruck und in Teilen unter Überdruck stehendes System, bevorzugt für ein Heizgerät mit Abgasgebläse. Unter Heizgerät wird beispielsweise ein Brennwertgerät oder eine Kraft-Wärme-Kopplungsanlage, insbesondere eine Brennstoffzelle verstanden, bei der die Wärmeauskopplung im Unterdruck und die Abgasleitung im Überdruck betrieben wird. Sowohl bei der Wärmeauskopplung als auch in der Abgasleitung fällt Kondensat an.

Hierfür werden Kondensatabscheider eingesetzt, die das kondensierende Wasser ableiten. Wasser kann in einem Heizgerät dann kondensieren, wenn Gas in einem Wärmetauscher zur Nutzung der anfallenden Wärme gekühlt wird. Dabei steht im Vordergrund, einen Gasaustausch zwischen dem Heizgerät und der Umgebung zu verhindern, und zwar auch dann, wenn im Heizgerät ein Unterdruck oder Überdruck herrscht.

Hierfür sind aus dem Stand der Technik verschiedene Lösungen bekannt. Dies ist beispielsweise die Kondensatableitung über Magnetventile, die das Kondensat gesteuert über zwei wechselseitig öffnende Magnetventile ableitet. Ebenfalls bekannt ist die Verwendung eines druckdichten Kondensat-Auffangbehälters mit einer Pumpe, die angesammeltes Kondensat gegen die Druckdifferenz zur Umgebung abpumpt. Diese beiden Lösungen haben den Nachteil, dass ein hoher apparativer Aufwand getrieben werden muss. Darüber hinaus besteht das Risiko von Betriebsstörungen.

Aus der US 5,379,749 A ist ein Heizgerät mit einem Kondenstatabscheider mit zwei getrennten Kondensatfallen für den Überdruck- und den Unterdruckbereich bekannt. Einen solchen Kondensatabscheider im Detail offenbart die US 5,704,343 A
Die US 4,729,328 A und die US 4,611,622 A zeigen weitere Kondensatabscheider.

Die JP 2008-115546 A offenbart eine gemeinsame Siphonanordnung für eine Badewanne und einen Bodenablauf, die jedoch nicht für Unterdruck ausgelegt ist.

Außerdem ist es bekannt, das Kondensat über einen U-förmigen Siphon abzuleiten, wobei der Druckausgleich über einen geodätischen Höhenunterschied zwischen der Zu- und Ableitung des Siphons erfolgt. Hierbei ist jedoch problematisch, dass der Höhenunterschied des Siphons nur für einen eingeschränkten Druckdifferenz-Bereich ausgelegt werden kann. Grundsätzlich muss ein Kompromiss zwischen zuverlässiger Kondensatabführung und Unempfindlichkeit gegenüber Druckschwankungen gefunden werden. Dennoch lässt sich ein Leersaugen des Siphons bei Druckstößen nie völlig ausschließen.

Andererseits ist aus der JP 10-184471 A ein sehr einfach und zuverlässig arbeitender Kondensatabscheider für eine Überdruckkammer bekannt. In diesem Fall ist der Kondensatabscheider vorgesehen, das an der Überdruckseite des Ansaugtrakts einer turbogeladenen Maschine am Ladeluftkühler entstehende Kondensat abzuscheiden. Dieser Kondensatabscheider weist einen zylinderförmigen Kondensatbehälter mit senkrecht ausgerichteter Zylinderachse auf, in dem ein kugelförmiger Schwimmer enthalten ist, der in einer unteren Position die Verbindung zwischen Kondensatbehälter und Umgebung beziehungsweise der Kondensatsenke sperrt. Sobald der Flüssigkeitsstand einen Mindestpegel überschreitet, schwimmt der Schwimmer auf und das Kondensat wird aufgrund des Überdrucks sowie der Schwerkraft des Kondensats in Richtung der Kondensatsenke abfließen, bis der Flüssigkeitsstand einen Mindestpegel erreicht hat und der Schwimmer wieder in die untere Position zurückfällt. Darüber hinaus kann unter bestimmten Betriebsbedingungen im Ansaugtrakt kurzzeitig ein Unterdruck herrschen. Um ein Zurückfließen des Kondensats aus dem Kondensatbehälter in den Ansaugtrakt zu vermeiden, ist weiterhin eine obere Schwimmerposition vorgesehen, in der der Schwimmer die Verbindung zwischen Kondensatbehälter und Ansaugtrakt sperrt. Sobald kein Unterdruck mehr anliegt, fällt der Schwimmer wieder in die untere Schwimmerposition zurück.

Die Patentanmeldung EP 1 739 779 A1 zeigt ein Heizgerät auf der Basis einer Brennstoffzelle mit mehreren Kondensatabscheidern. Nachteilig ist jedoch, dass mehrere Kondensatabscheider einen höheren Kostenaufwand und einen höheren Montageaufwand bedeuten.

Es ist daher Aufgabe der Erfindung, für permanent unter Unterdruck stehende Systeme, insbesondere für Brennstoffzellensysteme, einen einfach und kostengünstig aufgebauten, aber zuverlässig funktionierenden Kondensatabscheider bereit zu stellen.

Der Kondensatabscheider soll ein robuste und sichere Kondensatabfuhr aus Überdruck- und Unterdruckbereichen des Heizgeräts ohne die Verwendung von bewegten Teilen oder gar aktiven Komponenten wie Ventilen oder Pumpen ermöglichen. Der Siphon hat dabei ebenfalls zum Ziel eine eigensichere Kondensatabfuhr zu realisieren, beim dem Abgasaustritt in den Aufstellraum auch bei trockenem oder ausgeblasenem Siphon nicht auftreten kann.

Dies wird durch einen Kondensatabscheider gemäß den Merkmalen des Anspruchs 1 gelöst. Durch eine Kombination aus spez. ausgelegtem Flaschensiphon für Unterdruckkondensat und zweitem Anschluss für Überdruckkondensat im Grund des Flaschensiphons (dadurch entsteht ein Röhrensiphon im Flaschensiphon) wird ermöglicht Unterdruck- und Überdrucckondensat mit einem Bauteil abzuführen.

Ein gemeinsamer Kondensatabscheider in Form eines Siphons sammelt Überdruck- und Unterdruckkondensat und führt alles über einen Anschluss ab. Es erfolgt kein Abgasaustritt aus dem Überdruckbereich bei ausgeblasenem oder ausgetrocknetem Siphon. Es werden keine bewegten Teile und keine aktiven Komponenten benötigt.

Weitere vorteilhafte Ausführungen des erfindungsgemäßen Kondensatabscheiders sowie ein Heizgerät mit einem erfindungsgemäßen Kondensatabscheider sind in den abhängigen Ansprüchen beschrieben.

Die Erfindung wird nun anhand der Figuren detailliert erläutert.

Es stellen dar:
- Figur 1:: Einen erfindungsgemäßen Kondensatabscheider in Ruhefunktion
- Figur 2:: Den Kondensatabscheider aus Figur 1 bei Inbetriebnahme
- Figur 3:: Den Kondensatabscheider aus Figur 1 im Betrieb
- Figur 4:: Den Kondensatabscheider aus Figur 2 im trockenen Zustand
- Figur 5:: Die Dimensionierung der Kammervolumina
- Figur 6:: Die Dimensionierung der Auslaufhöhe
- Figur 7:: Eine vorteilhafte Weiterbildung des Kondensatabscheiders

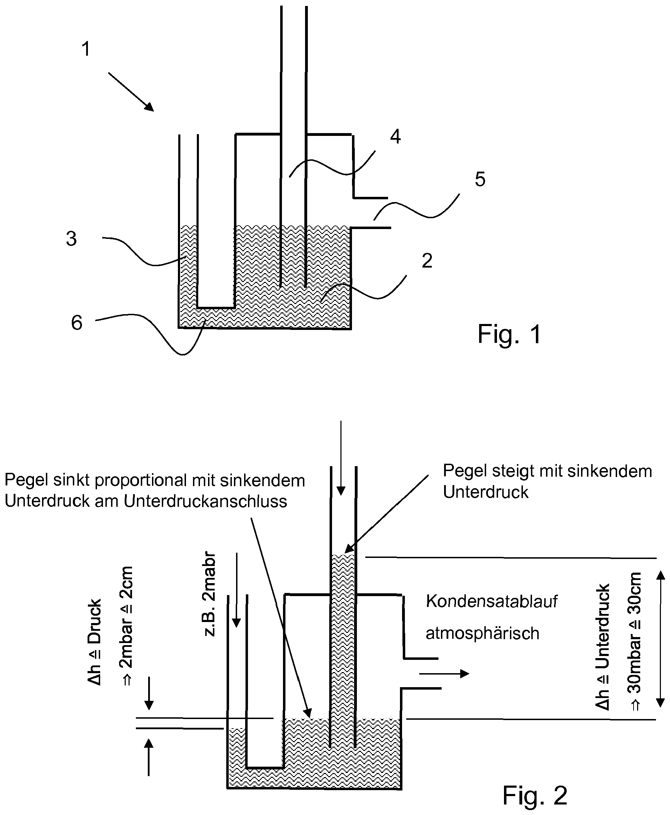

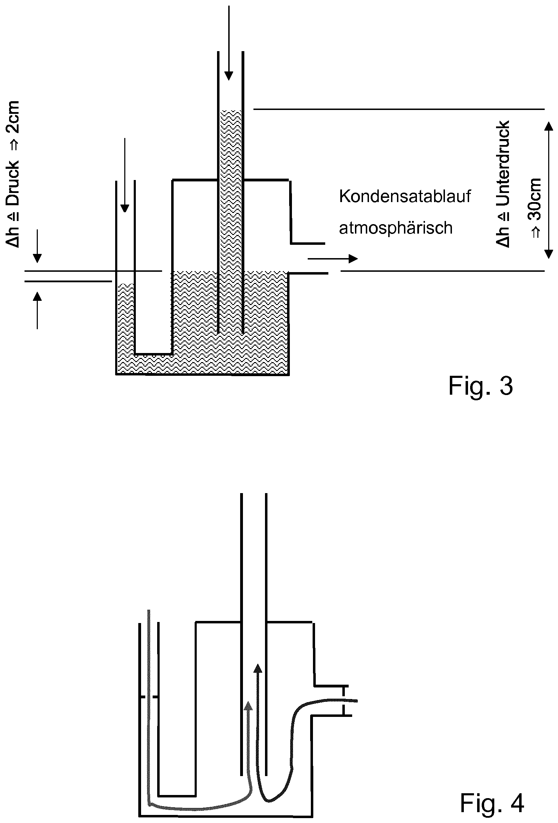

Figur 1 bis 4 zeigen einen erfindungsgemäßen Kondensatabscheider in verschiedenen Betriebssituationen.

Bei ersten Anwendungen bei denen Kondensat im Unterdruckbereich auftritt, werden z.B. gedichtete Kondensathebepumpen verwendet.

Durch eine Kombination aus spez. ausgelegtem Flaschensiphon für Unterdruckkondensat und zweitem Anschluss für Überdruckkondensat im Grund des Flaschensiphons (dadurch entsteht ein Röhrensiphon im Flaschensiphon) wird ermöglicht Unterdruck- und Überdrucckondesat mit einem Bauteil abzuführen.

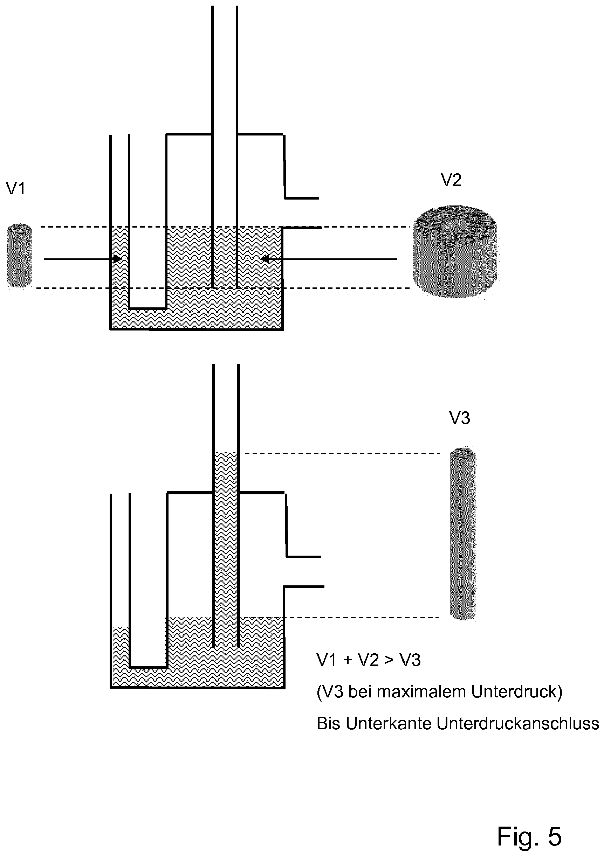

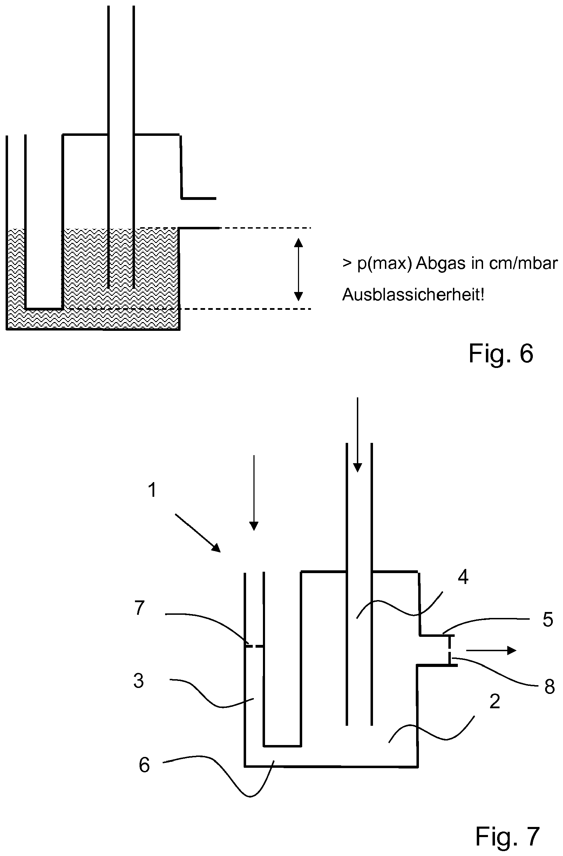

Figur 5 und 6 zeigen die Dimensionierung des erfindungsgemäßen Kondensatabscheiders. Bei der Auslegung des Flaschensiphons muss die Höhendifferenz der Anschlüsse Kondensatzulauf und -ablauf dem maximal auftretenden Unterdruck entsprechen, damit der hydrostatische Druckunterschied die Druckdifferenz zwischen Überdruck- und Unterdruckbereichen kompensieren kann. Weiterhin besteht die Notwendigkeit, dass der Siphon eine hinreichende Wassermenge vorhält, damit bei wechselnden Betriebszuständen unterschiedliche Differenzdrücke kompensiert werden können. Das vorgehaltene Wasservolumen muss größer dem Wasservolumen im Unterdruckanschlussrohr bei maximalem Unterdruck zzgl. einem Mindestwassermenge zur Aufrecherhaltung der Siphonfunktion sein.

Figur 7 zeigt eine Weiterbildung des erfindungsgemäßen Kondensatabscheiders. Durch Querschnittsverengungen (Blenden) (7, 8) im Überdruckanschluss und im Kondensatablauf aus dem Siphon wird die Funktion des Systems auch bei trockenem oder ausgeblasenem Siphon sichergestellt. Die Querschnitte werden so gewählt, dass der Fehlluftstrom, der in den Unterdruckteil des Systems gesaugt wird gering bleibt und den Systembetrieb nicht stört. Die Querschnittsverengungen stellen ebenfalls sicher, dass kein Abgasaustritt aus dem Kondensatanschluss auftreten kann, da das zurückströmende Abgas stets wieder in den Unterdruckteil zurückgesogen wird.

### Bezugszeichenliste

- 1: Kondensatabscheider
- 2: Flaschensiphon
- 3: Überdruckanschluss
- 4: Unterdruckanschluss
- 5: Kondensatablauf
- 6: Verbindung
- 7: Querschnittsverengung (Blende)
- 8: Querschnittsverengung (Blende)

## Patentansprüche

1. Kondensatabscheider (1), wobei der Kondensatabscheider (1) einen Überdruckanschluss (3, 6) zum Abscheiden von Kondensat aus einer mit Überdruck beaufschlagten Kondensatquelle und einen Unterdruckanschluss (4) zum Abscheiden von Kondensat aus einer mit Unterdruck beaufschlagten Kondensatquelle aufweist, wobei der Kondensatabscheider (1) durch einen Flaschensiphon (2) für Unterdruckkondensat gebildet wird, wobei der Flaschensiphon (2) so ausgelegt ist, dass die Länge des Unterdruckanschlusses (4) so ausgeführt ist, dass die Funktion des Kondensatabscheiders bei einem Unterdruck im Unterdruckanschluss (4) von 10 mbar gegenüber dem Atmosphärendruck gewährleistet ist, und wobei der Überdruckanschluss (3, 6) in Form eines Rohres bis in den Grund des Flaschensiphons (2) geführt ist und mit dem Flaschensiphon (2) einen Röhrensiphon (3, 6, 2) bildet, so dass gemeinsam Unterdruck- und Überdruckkondensat abgeführt werden kann.

2. Kondensatabscheider (1) nach Anspruch 1, wobei die Länge des Überdruckanschlusses (3) so auf die Länge des Unterdruckanschlusses (4) und die Höhe des Flaschensiphons (2) abgestimmt ist, dass die Funktion des Kondensatabscheiders bei einem Überdruck von 50 mbar gegenüber dem Atmosphärendruck gewährleistet ist.

3. Kondensatabscheider nach einem der Ansprüche 1 bis 2, wobei der Überdruckanschluss (3) und/oder der Unterdruckanschluss (4) und/oder der Kondesantablauf (5) eine Drosselblende aufweist.

4. Heizgerät, bevorzugt ein Brennwertgerät oder eine Kraft-Wärme-Kopplungsanlage, besonders bevorzugt eine Brennstoffzelle mit einem Kondensatabscheider nach einem der Ansprüche 1 bis 3.

## Claims

1. Condensate separator (1), wherein the condensate separator (1) has a positive pressure connection (3, 6) for separating condensate from a condensate source subjected to positive pressure and a negative pressure connection (4) for separating condensate from a condensate source subjected to negative pressure, wherein the condensate separator (1) is formed by a bottle siphon (2) for negative pressure condensate, wherein the bottle siphon (2) is designed such that the length of the negative pressure connection (4) is constructed such that the function of the condensate separator is guaranteed in the case of a negative pressure in the negative pressure connection (4) of 10 mbar with respect to the atmospheric pressure, and wherein the positive pressure connection (3, 6) is guided in the form of a pipe into the base of the bottle siphon (2) and forms with the bottle siphon (2) a tube siphon (3, 6, 2) such that positive pressure condensate and negative pressure condensate can be discharged together.

2. Condensate separator (1) according to claim 1, wherein the length of the positive pressure connection (3) is coordinated with the length of the negative pressure connection (4) and the height of the bottle siphon (2) such that the function of the condensate separator is guaranteed in the case of a positive pressure of 50 mbar with respect to the atmospheric pressure.

3. Condensate separator according to any of claims 1 to 2, wherein the positive pressure connection (3) and/or the negative pressure connection (4) and/or the condensate discharge (5) has a flow restrictor.

4. Heating device, preferably a condensing boiler or a cogeneration plant, most preferably a fuel cell having a condensate separator according to any of claims 1 to 3.

## Revendications

1. Séparateur de condensat (1), dans lequel le séparateur de condensat (1) présente un raccord de surpression (3, 6) pour la séparation de condensat d'une source de condensat alimentée en surpression et un raccord de dépression (4) pour la séparation de condensat d'une source de condensat alimentée en dépression, dans lequel le séparateur de condensat (1) est formé par un siphon de bouteille (2) pour du condensat de dépression, dans lequel le siphon de bouteille (2) est conçu de sorte que la longueur du raccord de dépression (4) soit réalisée de sorte que la fonction du séparateur de condensat soit garantie en cas de dépression dans le raccord de dépression (4) de 10 mbars par rapport à la pression atmosphérique, et dans lequel le raccord de surpression (3, 6) est guidé sous la forme d'un tube jusque dans le fond du siphon de bouteille (2) et forme avec le siphon de bouteille (2) un siphon de tubes (3, 6, 2) de sorte que du condensat de dépression et de surpression puisse être évacué ensemble.

2. Séparateur de condensat (1) selon la revendication 1, dans lequel la longueur du raccord de surpression (3) est adaptée à la longueur du raccord de dépression (4) et la hauteur du siphon de bouteille (2) de sorte que la fonction du séparateur de condensat soit garantie en cas de surpression de 50 mbars par rapport à la pression atmosphérique.

3. Séparateur de condensat selon l'une quelconque des revendications 1 à 2, dans lequel le raccord de surpression (3) et/ou le raccord de dépression (4) et/ou l'évacuation de condensat (5) présente un diaphragme d'étranglement.

4. Appareil de chauffage, de préférence un appareil à puissance calorifique ou installation de couplage force-chaleur, de manière de loin préférée une cellule de combustible avec un séparateur de condensat (1) selon l'une quelconque des revendications 1 à 3.
